# EUROPÄISCHE PATENTANMELDUNG

(11) **EP 4 707 200 A1**
(43) Veröffentlichungstag der Anmeldung: **11.03.2026**
(21) Anmeldenummer: 25191332.3
(22) Anmeldetag: 23.07.2025
(51) Int. Cl.: B65G 21/20

(54) **BEHÄLTERBEHANDLUNGSANLAGE MIT EINER VAKUUMBRÜCKE**

(30) Priorität: 09.09.2024 DE 102024002885
(71) Anmelder: H. F. Meyer Maschinenbau GmbH, 23730 Neustadt in Holstein (DE)
(72) Erfinder: Hamann, Matthias, 23744 Schönwalde am Bungsberg (DE); Schaaf, Daniel, 23701 Süsel (DE)
(74) Vertreter: Patentanwaltskanzlei Methling

(57) **Zusammenfassung**

Die Erfindung betrifft eine Behälterbehandlungsanlage mit einer Vakuumbrücke, mittels derer Behälter durch einen Unterdruck an einem Transportmittel gehalten und transportiert werden, wobei das Transportmittel durch einen flexiblen Transportgurt (2) gebildet ist.

## Beschreibung

Die Erfindung betrifft eine Behälterbehandlungsanlage mit einer Vakuumbrücke, mittels derer Behälter durch einen Unterdruck an einem Transportmittel gehalten und transportiert werden.

Derartige Behälterbehandlungsanlagen mit einer Vakuumbrücke sind beispielsweise aus der DE 10 2022 114 251 A1 bekannt. Dabei ist das Transportmittel durch eine Scharnierbandkette gebildet.

Nachteilig bei den bekannten Behälterbehandlungsanlagen mit einer Scharnierbandkette ist es, dass es aufgrund von Unebenheiten der Scharnierbandkette zu Abweichungen der transportierten Behälter von der gewünschten Position kommen kann. Derartige Vakuumbrücken werden insbesondere dazu eingesetzt, die Behälter mittels eines Lasers an der Behälterunterseite zu codieren. Werden jedoch die Behälter an der Scharnierbandkette nicht optimal positioniert, können auch keine exakt positionierten Codierungen an der Behälterunterseite angebracht werden.

Ein weiterer Nachteil der Scharnierbandkette besteht darin, dass durch die Scharnierverbindungen der einzelnen Kettenglieder Luft eintritt, sodass sich zur Erzeugung des benötigten Unterdrucks über die Länge der Transportstrecke der Vakuumbrücke ein erheblicher Energieverbrauch ergibt.

Die Aufgabe der Erfindung ist es diese Nachteile zu überwinden und eine Behälterbehandlungsanlage anzugeben, mittels derer insbesondere ein akkurates und exakt wiederholbares Positionieren und Transportieren der Behälter ermöglicht wird.

Diese Aufgabe wird erfindungsgemäß durch die Behälterbehandlungsanlage gemäß Anspruch 1 gelöst. Vorteilhafte Weiterbildungen der Erfindung sind in den abhängigen Ansprüchen angegeben.

Besonders vorteilhaft bei der Behälterbehandlungsanlage mit einer Vakuumbrücke, mittels derer Behälter durch einen Unterdruck an einem Transportmittel gehalten und transportiert werden, ist es, dass das Transportmittel durch einen flexiblen Transportgurt gebildet ist.

Im Sinne der Erfindung wird der Abschnitt, über den die durch einen Unterdruck an dem Transportmittel gehaltenen Behälter transportiert werden, als Vakuumbrücke bezeichnet, wenngleich kein Vakuum im eigentlichen Sinne erzeugt wird, sondern lediglich ein Unterdruck.

Im Sinne der Erfindung werden die Begriffe Dosen, Gebinde und Behälter synonym benutzt. Eingesetzt werden derartige Vakuumbrücken insbesondere zum Transport von Getränkedosen in Abfüllanlagen der Getränkeindustrie. Jedoch ist die Erfindung nicht hierauf beschränkt.

Durch die Ausbildung des Transportmittels als flexiblen Transportgurt werden die Nachteile einer Scharnierbandkette überwunden. Ein Transportgurt ist mit einer definierten Oberfläche ausgestattet, sodass ein akkurates und exakt wiederholbares Positionieren und Transportieren der Behälter ermöglicht werden, wodurch der Ausschuss bei einem Codieren der Behälter vermindert wird. Ein weiterer Vorteil ist es, dass die Kopplungsstellen der einzelnen Glieder der Scharnierbandkette und das unerwünschte Eindringen von Luft in die Vakuumbrücke entfallen, wodurch der Energieverbrauch der Behälterbehandlungsanlage signifikant verringert werden kann.

Ein weiterer Vorteil des Transportgurtes gegenüber einer Scharnierbandkette ist das ruhigere Laufverhalten des Transportgurtes, wodurch einerseits ein gleichmäßiger Lauf des Transportmittels eintritt und ferner weniger Geräusche als bei dem Einsatz einer Scharnierbandkette erzeugt werden.

Vorzugsweise weist der Transportgurt eine Verbindungsstelle auf, an welcher zwei Enden des Transportgurtes zur Ausbildung eines endlosen Transportgurtes miteinander verbindbar sind. Durch eine derartige Verbindungsstelle ist der Transportgurt auf eine leichte Weise sowohl demontierbar als auch in der Behälterbehandlungsanlage montierbar, sofern aufgrund eines Verschleißes ein Austausch erforderlich sein sollte.

Bevorzugt weisen die beiden Enden des Transportgurtes an der Verbindungsstelle stirnseitig angeordnete Ösen auf, die von einem senkrecht zur Laufrichtung des Transportgurtes einsteckbaren Verbindungsstab durchgriffen werden.

Durch den Verbindungsstab, der von der Seite her senkrecht zur Laufrichtung des Transportgurtes durch die stirnseitig an den beiden Enden des Transportgurtes angeordneten Ösen durchgreift, werden die beiden Enden des Transportgurtes aneinander fixiert und gesichert.

Vorzugsweise sind die stirnseitig angeordneten Ösen der beiden Enden des Transportgurtes alternierend angeordnet. Durch eine alternierende Anordnung greifen die Ösen beider Enden des Transportgurtes quasi ineinander, sodass ein Verkanten beider Enden des Transportgurtes zueinander auch unter Zug zuverlässig vermieden werden.

Bevorzugt weist die Behälterbehandlungsanlage zumindest eine elektromotorisch angetrieben Antriebsrolle auf, mittels derer der Transportgurt angetrieben wird.

Vorzugsweise weist die Behälterbehandlungsanlage zumindest eine Spannrolle auf, mittels derer der Transportgurt gespannt wird. Durch die Anordnung einer Spannrolle wird der Transportgurt auf die gewünschte und für einen zuverlässigen Transport der Behälter entlang der Vakuumbrücke erforderliche Spannung gespannt.

Bevorzugt weist die Behälterbehandlungsanlage mehrere Umlenkrollen auf, über welche der Transportgurt geführt wird.

Vorzugsweise weist der Transportgurt vorderseitig und/oder rückseitig eine Oberflächenbeschichtung auf. Mit der Vorderseite des Transportgurtes ist jene Seite des Transportgurtes bezeichnet, an welcher die Behälter anliegen und durch den Unterdruck gehalten werden. Mit der Rückseite des Transportgurtes ist die Seite des Transportgurtes bezeichnet, welche über die Umlenkrollen läuft.

Eine derartige Oberflächenbeschichtung an der Vorderseite des Transportgurtes dient der Schaffung einer definierten und ausreichend glatten Oberfläche, wodurch ein akkurates und exakt wiederholbares Positionieren und Transportieren der Behälter ermöglicht wird, da etwaige Formabweichungen an der Vorderseite des Transportgurtes durch die Oberflächenbeschichtung ausgeglichen sind. Dadurch sind etwaige Unebenheiten zur Verbesserung der Unterdruckwirkung ausgeglichen.

Eine Oberflächenbeschichtung an der Rückseite des Transportgurtes dient insbesondere der Verbesserung der Laufeigenschaften und dem Verschleißschutz.

Vorzugsweise weist der Transportgurt eine Lochung auf, insbesondere eine regelmäßige Lochung. Durch die Lochung des Transportgurtes wird eine strömungstechnische Verbindung zwischen dem an dem Transportgurt durch den Unterdruck fixierten Behälter und einer Vakuumkammer der Behälterbehandlungsanlage geschaffen.

Dabei kann die Lochung in Form kreisrunder und/oder ovaler Löcher und/oder als Langlöcher ausgebildet sein.

Vorzugsweise ist mittels einer Absaugung ein Unterdruck in einer Vakuumkammer erzeugbar, an welchem der Transportgurt entlanggeführt wird, wobei der Transportgurt über einen definierten Abschnitt strömungstechnisch mit der Vakuumkammer verbunden ist. Durch die strömungstechnische Verbindung des Transportgurtes über einen definierten Abschnitt wird eben über diesen Abschnitt der Transportgurt mit einem Unterdruck beaufschlagt, sodass in diesem definierten Abschnitt ein Fixieren der Behälter an dem Transportgurt aufgrund des Unterdrucks und ein Transport der Behälter entlang dieses definierten Abschnitts erfolgt.

Vorzugsweise weist der Transportgurt rückseitig eine oder mehrere Führungen auf, insbesondere im Querschnitt trapezförmige Führungskeile.

Die Führungen sind durch Vorsprünge im Querschnitt des Transportgurtes ausgebildet, die in korrespondierende Ausnehmungen, insbesondere in Form von Nuten, entlang der Bahn des Transportgurtes entlang der Vakuumkammer sowie in die Umlenkrollen eingebracht sind.

Vorzugsweise weist die Behälterbehandlungsanlage eine Codiereinheit auf, insbesondere einen Laser und/oder eine Tintenstrahleinheit, mittels derer die an dem Transportgurt mittels des Unterdrucks gehaltenen Behälter an der Behälterunterseite codierbar sind.

Bevorzugt weist die Behälterbehandlungsanlage zumindest im Bereich der Vakuumbrücke eine Einhausung auf, insbesondere kann die Einhausung eine Codiereinheit, insbesondere einen Laser und/oder eine Tintenstrahleinheit vollständig von der Umgebung abkapseln. Besonders bei der Verwendung eines Lasers als Codiereinheit ist eine vollständige Abkapselung des Lasers von der Umgebung erforderlich, um Augenverletzung beim Bedienpersonal zuverlässig zu verhindern.

Vorzugsweise weist die die Behälterbehandlungsanlage im Bereich der Vakuumbrücke eine Ausschleusung auf, mittels derer einzelne durch den Unterdruck an dem Transportgurt gehaltene Behälter ausgeschleust werden können.

Es ist bekannt, eine Ausschleusung im Anschluss nach der Übergabe der Behälter auf das Abtransportband anzuordnen, was den Nachteil hat, dass durch die Übergabe vom Vakuumband zum Abtransport ein Schlupf entstehen kann und sich die Behälter nicht mehr in der errechneten Position befinden. Um dieses Problem zu lösen ist eine neue Ermittlung der Position der Behälter erforderlich. Durch die Anordnung einer Ausschleusung im Bereich der Vakuumbrücke wird dieses Problem vermieden. Mit dem Begriff der Anordnung der Ausschleusung im Bereich der Vakuumbrücke ist dabei eine Position bezeichnet, in welcher die Behälter noch durch den Unterdruck an dem Transportgurt gehalten werden, bevor die Behälter von der Vakuumbrücke an ein nachfolgendes Transportband oder dergleichen übergeben werden.

Die Ausschleusung wird im direkten Transport unterhalb der Vakuumbrücke angeordnet und die Behälter werden seitlich von der Vakuumbrücke ausgeschleust, so dass der Behälter nach unten wegfällt.

Bevorzugt weist die Ausschleusung einen Schieber auf, mittels dessen einzelne Behälter herausgeschleust und senkrecht zur Transportrichtung des Transportgurtes von dem Transportgurt zur Seite heruntergeschoben werden. Mit dem Begriff einer Herausschleusung senkrecht zur Transportrichtung des Transportgurtes von dem Transportgurt zur Seite ist dabei jede Bewegungsrichtung umfasst, die eine Komponente senkrecht zur Transportrichtung des Transportgurtes aufweist.

Der Antrieb des Schiebers kann durch eine einfache Luftdüse oder einen pneumatisch betätigten Zylinder erfolgen. Alternativ oder kumulativ kann ein elektromotorischer Antrieb des Schiebers erfolgen.

Zwei Ausführungsbeispiele der Erfindung werden nachfolgend anhand der Figuren erläutert. Es zeigen:
- Fig. 1: Eine perspektivische Ansicht einer Behälterbehandlungsanlage mit einer Vakuumbrücke;
- Fig. 2: eine perspektivische Teilansicht der Verbindungsstelle des Transportgurtes;
- Fig. 3: eine schematische Darstellung der Seitenansicht der Verbindungsstelle des Transportgurtes bei getrennter Verbindung;
- Fig. 4: eine schematische Darstellung der Draufsicht der Verbindungsstelle des Transportgurtes bei getrennter Verbindung;
- Fig. 5: eine schematische Ansicht einer Behälterbehandlungsanlage mit einer Vakuumbrücke und Ausschleusung.

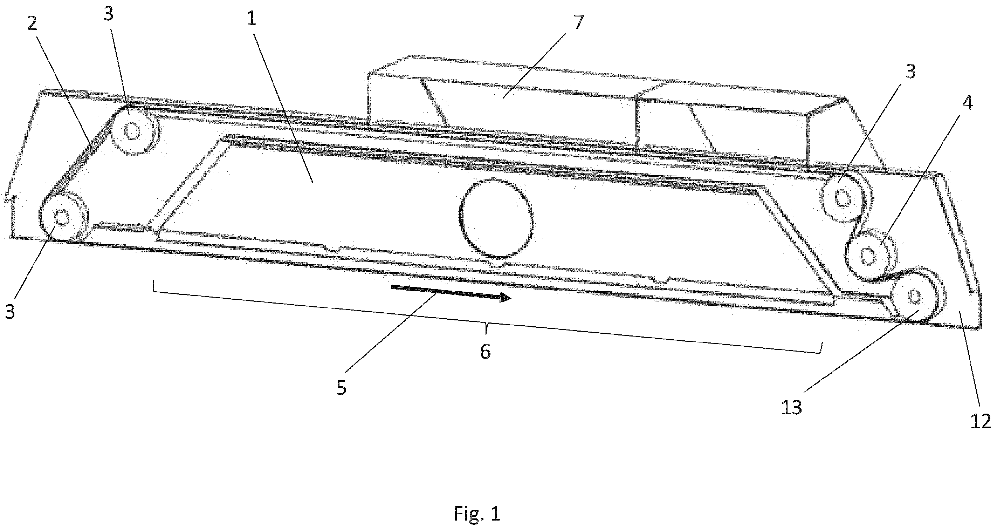

Figur 1 zeigt perspektivische Ansicht einer Behälterbehandlungsanlage mit einer Vakuumbrücke.

Die Behälterbehandlungsanlage weist eine Vakuumkammer 1 auf, die in der mittels einer Absaugung ein Unterdruck gegenüber der Umgebung erzeugt wird.

Ein Transportgurt 2 ist über mehrere Umlenkrollen 3 geführt und wird mittels der Spannrolle 4 auf die gewünschte Spannung gebracht. Die Laufrichtung des Transportgurtes 2 und damit der transportierten Behälter ist durch den Pfeil 5 gekennzeichnet. Der Antrieb des Transportgurtes 2 erfolgt mittels der elektromotorisch angetriebenen Antriebsrolle 13.

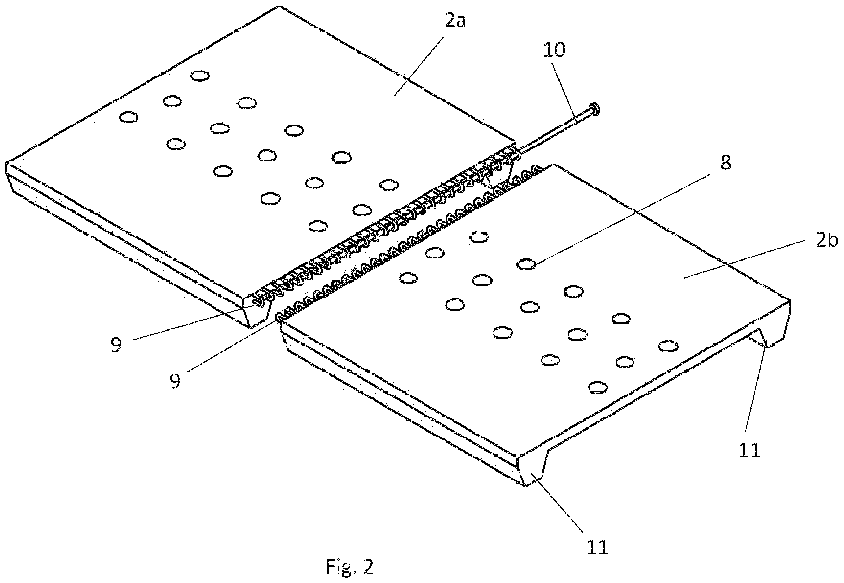

In dem Abschnitt 6 entlang der Vakuumkammer 1 ist der Transportgurt mit der Vakuumkammer 1 strömungstechnisch verbunden. Aufgrund einer regelmäßigen Lochung 8 des Transportgurtes, wie sie in Figur 2 erkennbar ist, wird eine strömungstechnische Verbindung geschaffen und die Behälter werden in dem Abschnitt 6 entlang der Vakuumkammer 1 durch den Unterdruck an dem Transportgurt 2 fixiert und von dem Transportgurt 2 transportiert.

Zur Codierung der Behälter weist die Behälterbehandlungsanlage ferner einen Laser auf, der in der Einhausung 7 für den Laser angeordnet ist. Die Vakuumbrücke mit dem Transportgurt 2 ist in einem Maschinengehäuse 12 aufgenommen. In der Darstellung gemäß Figur 1 ist nur die Rückwand des Gehäuses 12 dargestellt. Im betriebsbereiten vollständig montierten Zustand bildet das Gehäuse 12 eine die gesamte Anordnung vollständig umschließende Einhausung.

Figur 2 zeigt eine perspektivische Teilansicht der Verbindungsstelle des geschnittenen Transportgurtes 2 mit den beiden Enden 2a, 2b des Transportgurtes 2. Die Darstellung nach Figur 2 zeigt den Blick auf die Vorderseite des Transportgurtes 2, also jene Seite, an welcher die Behälter anliegen und gehalten werden.

Durch die Verbindungstelle kann ein umlaufender Transportgurt 2 ausgebildet werden, der auf leichte Art und Weise demontierbar und montierbar ist, sofern ein Austausch des Transportgurtes 2 aufgrund von Verschließ erforderlich wird.

Die beiden Enden 2a, 2b des Transportgurtes weisen an ihren Stirnseiten vorstehende Ösen 9 auf, die im montierten Zustand alternierend ineinandergreifen und zur Sicherung der Fixierung von einem von der Seite eingeschobenen Verbindungsstab 10 durchgriffen und aneinander gesichert werden.

Rückseitig weist der Transportgurt 2 Führungskeile 11 auf, die einen trapezförmigen Querschnitt aufweisen und die in korrespondierenden Ausnehmungen der Umlenkrollen 3 eingreifen. Durch die Führungskeile 11 ist ein seitliches Herauswandern oder Schlagen des Transportgurtes 2 zuverlässig verhindert.

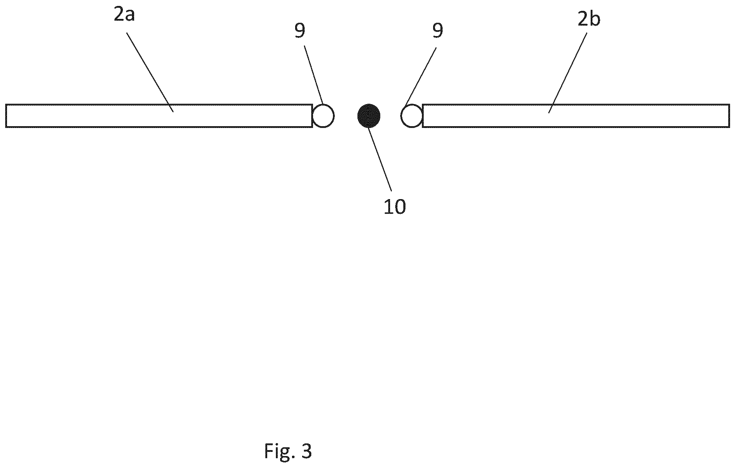

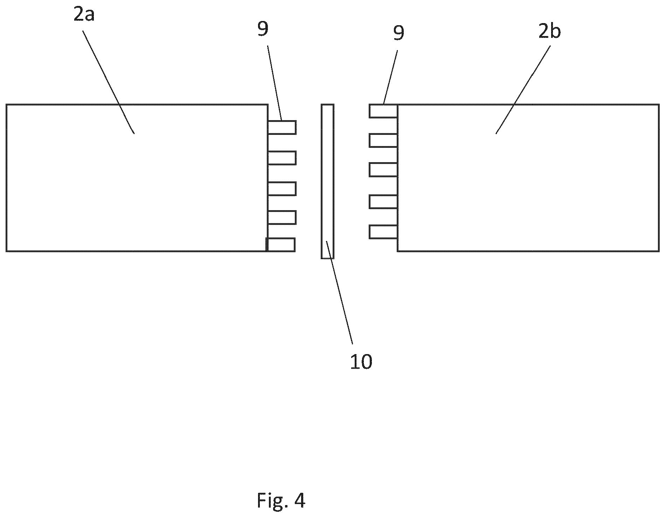

Lediglich zur Erläuterung und nicht maßstabsgerecht zeigen die Figuren 3 und 4 eine schematische Darstellung der Seitenansicht in Figur 3 bzw. eine schematische Darstellung der Draufsicht in Figur 4 der Verbindungsstelle des Transportgurtes 2 bei getrennter Verbindung der beiden Enden 2a, 2b des Transportgurtes 2 mit den stirnseitig angeordneten Ösen 9, die im montierten Zustand von dem Verbindungsstab 10 durchgriffen werden.

Wie in der Draufsicht nach Figur 4 erkennbar ist, sind die Ösen 9 an den Stirnseiten der beiden Enden 2a, 2b des Transportgurtes 2 alternierend angeordnet und greifen im montierten Zustand ineinander. Im montierten Zustand werden die Ösen 9 von dem Verbindungsstab 10 durchgriffen. Aufgrund der vereinfachten und rein schematischen Darstellung der Verbindungsstelle in den Figuren 3 und 4 wurde auf die Darstellung der Lochung 8 verzichtet.

Die Behälter werden mit einem Transportförderer zur Vakuumbrücke transportiert, wo sie mittels eines Unterdrucks an eine daran entlanglaufenden Transportgurt 2 angesaugt werden, am Ende der Vakuumstrecke 6 werden die Behälter wieder an ein Transportförderer abgegeben. Der separat angetriebene Transportgurt 2 der Vakuumbrücke transportiert alle angesaugten Behälter über eine Markierungsposition, in der diese im Durchlauf von unten mit Farbe oder einer Lasergravur codiert werden. Im Anschluss wird diese Codierung mittels einer nicht dargestellten Kamera kontrolliert.

Der Transportgurt 2 besitzt eine durchgehende Oberfläche, die mit einer Beschichtung ausgestattet ist. Des Weiteren besitzt der Transportgurt 2 keine Scharnieröffnungen, durch die Umgebungsluft mit in die Vakuumkammer 1 gelangen kann, die zusätzlich evakuiert werden muss. Dies hat den Vorteil, dass weniger Energie zur Vakuumerzeugung benötigt wird. Mit der Beschichtung des Transportgurtes 2 können sogar kleine Unebenheiten an den Behältern ausgleichen werden, was für einen optimalen und ruhigen Transport der Behälter sorgt. Die Beschichtung auf dem Transportgurt 2 stellt somit einen sicheren und stabilen Halt der Behälter dar. Auch bei hohen Geschwindigkeiten wird somit ein sehr gutes Codierungsergebnis erreicht. An der Rückseite sind an dem Transportgurt 2 sogenannte Führungskeile 11 angebracht, die einen optimalen und stabilen Transport sicherstellen.

Die Lochung im Transportgurt 2 ähnelt dem Lochbild in der Scharnierbandkette. Mit einen Umbausatz kann der Transportgurt 2 an vorhandenen Vakuumbrücken mit Scharnierbandkette nachgerüstet werden.

Besonders vorteilhaft ist es, dass ohne viel Aufwand und Demontage von Anlagenteilen das Transportmittel gewechselt werden kann. Hierzu hat der Transportgurt 2 eine Verbindung, die mit einen Verbindungsstab 10 die beiden Endstücke 2a, 2b verbindet. Hieraus ergibt sich ein großer Vorteil gegenüber der Verwendung eines Endlosgurtes.

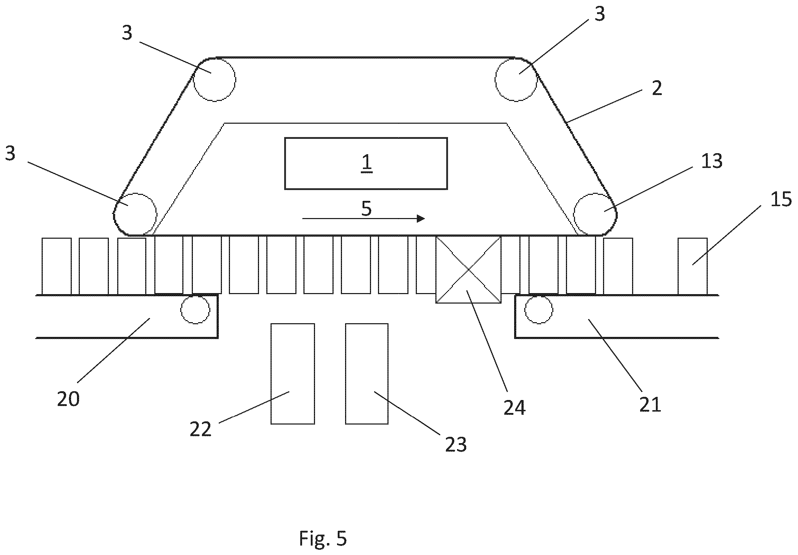

Figur 5 zeigt eine schematische Ansicht einer Behälterbehandlungsanlage mit einer Vakuumbrücke und Ausschleusung.

Die Behälterbehandlungsanlage weist eine Vakuumkammer 1 auf, die in der mittels einer Absaugung ein Unterdruck gegenüber der Umgebung erzeugt wird.

Ein Transportgurt 2 ist über mehrere Umlenkrollen 3 geführt. Die Laufrichtung des Transportgurtes 2 und damit der transportierten Behälter ist durch den Pfeil 5 gekennzeichnet. Der Antrieb des Transportgurtes 2 erfolgt mittels der elektromotorisch angetriebenen Antriebsrolle 13.

In dem unteren Abschnitt entlang der Vakuumkammer 1 ist der Transportgurt 2 mit der Vakuumkammer 1 strömungstechnisch verbunden. Aufgrund einer regelmäßigen Lochung 8 des Transportgurtes, wie sie in Figur 2 erkennbar ist, wird eine strömungstechnische Verbindung geschaffen und die Behälter werden in dem Abschnitt entlang der Vakuumkammer 1 durch den Unterdruck an dem Transportgurt 2 fixiert und von dem Transportgurt 2 in der Transportrichtung 5 transportiert.

Die Zuführung der Behälter 15 zu der Vakuumbrücke erfolgt mittels des Zufuhrtransportbandes 20.

Zur Codierung der Behälter weist die Behälterbehandlungsanlage einen Codierer 22 auf. Bei dem Codierer 22 kann es sich insbesondere um einen Laser und/oder einen Drucker zur Codierung der Behälter handeln. Zur Kontrolle ist ferner eine Kamera 23 angeordnet.

Nach der Codierung der Behälter 15 und der Kontrolle mittels des Kamera 23 erfolgt der Abtransport über das Abtransportband 21.

Vor der Übergabestelle der Behälter 15 von der Vakuumbrücke an das Abtransportband 21 ist eine Ausschleusung 24 angeordnet.

Die Ausschleusung 24 wird im direkten Transport unterhalb der Vakuumbrücke angeordnet und die Behälter werden seitlich von der Vakuumbrücke ausgeschleust, so dass der Behälter 15 nach unten wegfällt.

Hierzu weist die Ausschleusung 24 einen Schieber auf, mittels dessen einzelne Behälter 15 herausgeschleust und senkrecht zur Transportrichtung 5 des Transportgurtes 2 von dem Transportgurt 2 zur Seite heruntergeschoben werden.

## Patentansprüche

1. Behälterbehandlungsanlage mit einer Vakuumbrücke, mittels derer Behälter durch einen Unterdruck an einem Transportmittel gehalten und transportiert werden, **dadurch gekennzeichnet, dass** das Transportmittel durch einen flexiblen Transportgurt (2) gebildet ist.

2. Behälterbehandlungsanlage nach Anspruch 1, **dadurch gekennzeichnet, dass** der Transportgurt (2) eine Verbindungsstelle aufweist, an welcher zwei Enden (2a, 2b) des Transportgurtes (2) zur Ausbildung eines endlosen Transportgurtes (2) miteinander verbindbar sind.

3. Behälterbehandlungsanlage nach Anspruch 2, **dadurch gekennzeichnet, dass** die beiden Enden (2a, 2b) des Transportgurtes (2) an der Verbindungsstelle stirnseitig angeordnete Ösen (9) aufweisen, die von einem senkrecht zur Laufrichtung (6) des Transportgurtes (2) einsteckbaren Verbindungsstab (10) durchgriffen werden.

4. Behälterbehandlungsanlage nach Anspruch 3, **dadurch gekennzeichnet, dass** die stirnseitig angeordneten Ösen (9) der beiden Enden (2a, 2b) des Transportgurtes (2) alternierend angeordnet sind.

5. Behälterbehandlungsanlage nach einem der vorherigen Ansprüche, **dadurch gekennzeichnet, dass** die Behälterbehandlungsanlage zumindest eine elektromotorisch angetrieben Antriebsrolle (13) aufweist, mittels derer der Transportgurt (2) angetrieben wird.

6. Behälterbehandlungsanlage nach Anspruch 3, **dadurch gekennzeichnet, dass** die Behälterbehandlungsanlage zumindest eine Spannrolle (4) aufweist, mittels derer der Transportgurt (2) gespannt wird.

7. Behälterbehandlungsanlage nach einem der vorherigen Ansprüche, **dadurch gekennzeichnet, dass** die Behälterbehandlungsanlage mehrere Umlenkrollen (3) aufweist, über welche der Transportgurt (2) geführt wird.

8. Behälterbehandlungsanlage nach einem der vorherigen Ansprüche, **dadurch gekennzeichnet, dass** der Transportgurt (2) vorderseitig und/oder rückseitig eine Oberflächenbeschichtung aufweist.

9. Behälterbehandlungsanlage nach einem der vorherigen Ansprüche, **dadurch gekennzeichnet, dass** der Transportgurt (2) eine Lochung (8) aufweist, insbesondere eine regelmäßige Lochung.

10. Behälterbehandlungsanlage nach einem der vorherigen Ansprüche, **dadurch gekennzeichnet, dass** mittels einer Absaugung ein Unterdruck in einer Vakuumkammer (1) erzeugbar ist, an welchem der Transportgurt (2) entlanggeführt wird, wobei der Transportgurt (2) über einen definierten Abschnitt (6) strömungstechnisch mit der Vakuumkammer (1) verbunden ist.

11. Behälterbehandlungsanlage nach einem der vorherigen Ansprüche, **dadurch gekennzeichnet, dass** der Transportgurt (2) rückseitig eine oder mehrere Führungen (11) aufweist, insbesondere im Querschnitt trapezförmige Führungskeile.

12. Behälterbehandlungsanlage nach einem der vorherigen Ansprüche, **dadurch gekennzeichnet, dass** die Behälterbehandlungsanlage eine Codiereinheit aufweist, insbesondere einen Laser und/oder eine Tintenstrahleinheit, mittels derer die an dem Transportgurt (2) mittels des Unterdrucks gehaltenen Behälter an der Behälterunterseite codierbar sind.

13. Behälterbehandlungsanlage nach einem der vorherigen Ansprüche, **dadurch gekennzeichnet, dass** die Behälterbehandlungsanlage zumindest im Bereich der Vakuumbrücke eine Einhausung (7) und/oder ein Gehäuse (12) aufweist, insbesondere dass die Einhausung (7) eine Codiereinheit vollständig von der Umgebung abkapselt.

14. Behälterbehandlungsanlage nach einem der vorherigen Ansprüche, **dadurch gekennzeichnet, dass** die Behälterbehandlungsanlage im Bereich der Vakuumbrücke eine Ausschleusung (24) aufweist, mittels derer einzelne durch den Unterdruck an dem Transportgurt (2) gehaltene Behälter (15) ausgeschleust werden können.

15. Behälterbehandlungsanlage nach Anspruch 15, **dadurch gekennzeichnet, dass** die Ausschleusung einen Schieber aufweist, mittels dessen einzelne Behälter (15) herausgeschleust und senkrecht zur Transportrichtung (5) des Transportgurtes (2) von dem Transportgurt (2) zur Seite heruntergeschoben werden.
